# EUROPÄISCHE PATENTSCHRIFT

(11) **EP 1 398 552 B1**
(45) Veröffentlichungstag und Bekanntmachung des Hinweises auf die Patenterteilung: **11.01.2006**
(21) Anmeldenummer: 03020628.8
(22) Anmeldetag: 10.09.2003
(51) Int. Cl.: F16L 3/16

(54) **Halter zur schwenkbaren Lagerung eines Rohres**
Pivoting support for a pipe
Support pivotant pour un tuyau

(30) Priorität: 12.09.2002 DE 20214103 U
(43) Veröffentlichungstag der Anmeldung: 17.03.2004
(73) Patentinhaber: Reiku GmbH, 51674 Wiehl-Bomig (DE)
(72) Erfinder: Rumpel, Jürgen, 51580 Reichshof-Mittelagger (DE)
(74) Vertreter: Glawe, Delfs, Moll

(56) Entgegenhaltungen:
- DE-A- 10 211 212
- DE-B- 1 615 826
- DE-C- 482 629
- GB-A- 610 021
- US-A- 3 390 854
- US-A- 3 415 474

## Beschreibung

Die Erfindung betrifft einen Halter zur schwenkbaren Lagerung eines Rohres, insbesondere eines Wellrohres. Der erfindungsgemäße Halter dient vorzugsweise zum Halten eines als Wellrohr ausgebildeten Kabelschutzrohres, das ein oder mehrere Stromversorgungs- oder Steuerkabel aufnimmt, an einem Roboter derart, daß das Wellrohr den Schwenkbewegungen der Roboterarme oder dgl. folgen kann.

Aus WO 98/03813 ist eine Schelle für Rohre, Schläuche oder dgl. bekannt, die einen das Rohr aufnehmenden Kugelkörper aufweist, der in zwei als Kugelschalen ausgebildeten Schellenhälften nach Art eines Kugelgelenkes gelagert ist. Damit ist eine Schwenkbarkeit des Rohres in beliebiger Richtung gewährleistet. Der maximale Schwenkwinkel ist aber durch die Abmessungen der das Kugelelement umgebenden Kugelschale eingeschränkt.

Aus DE 299 23 475 U1 ist eine Halterung für einen Gartenschlauch bekannt, die mit zwei, um zueinander rechtwinklige Achsen schwenkbaren Halteteilen eine Schwenkbarkeit des Gartenschlauches in vertikaler und horizontaler Richtung nach Art eines Kardangelenkes ermöglicht, wobei jedoch eine der Schwenkachsen nicht durch die Schlauchachse verläuft und die Halterung sich in der jeweiligen Schwenkstellung selbsthemmend arretiert.

Aus EP 0 536 367 ist eine kardanische Lagerung für ein Öltransportrohr oder -schlauch zur Montage auf einem Schiff bekannt, die eine Anzahl von Rohrkrümmern nötig macht.

Aus der gattungsbildenden GB-610,021 A ist eine Halterung für ein Brennerrohr einer Gasturbine bekannt, bei der das Brennerrohr an seinem Ende am Turbinengehäuse fixiert ist und außerdem an zwei voneinander axial beabstandeten Stellen in je einer Gabel gehalten ist, an der das Brennerrohr um eine senkrecht zur Rohrachse verlaufende erste Achse drehbar gelagert ist und die ihrerseits am Turbinengehäuse schwenkbar oder flexibel gelagert ist derart, dass die beiden Gabeln eine Parallelogrammführung für das Brennerrohr bilden, die kleine Bewegungen oder Dehnungen des Brennerrohrs in seiner Längsrichtung gestattet.

Der Erfindung liegt die Aufgabe zugrunde, einen besonders einfach und kostengünstig herzustellenden Halter zur schwenkbaren Halterung eines Rohres, insbesondere Wellrohres, vorzuschlagen, der eine möglichst große Bewegungsfreiheit des Rohres für Schwenkbewegungen in allen Richtungen ermöglicht und sich besonders zur Führung von Kabelschutzrohren für Roboter oder dgl. eignet.

Die erfindungsgemäße Lösung der Aufgabe ist im Anspruch 1 angegeben. Die Unteransprüche beziehen sich auf weitere vorteilhafte Ausgestaltungen der Erfindung.

Ein Ausführungsbeispiel der Erfindung wird anhand der Zeichnungen näher erläutert. Es zeigt
- Fig. 1: in Seitenansicht einen erfindungsgemäßen Halter mit einem darin aufgenommenen Wellrohr,
- Fig. 2: die Rohraufnahme und die Gabel, ohne Rohr, in Richtung der Rohrachse gesehen,
- Fig. 3: eine Ansicht der Halterung gemäß Fig. 1, ohne Rohr, von oben gesehen,
- Fig. 4, Fig. 5: eine Frontansicht und Seitenansicht der ringförmigen Rohraufnahme,
- Fig. 6, Fig. 7: eine halbkreisförmige Backe der Rohraufnahme, in Richtung senkrecht bzw. parallel zur Rohrachse gesehen,
- Fig. 8, Fig. 9: in ähnlicher Ansicht wie Fig. 6 und Fig. 7 eine geänderte Ausführungsform der Backe,
- Fig. 10: in ähnlicher Darstellung wie Fig. 6 und Fig. 8, eine weitere Ausführungsform einer Backe,
- Fig. 11, Fig. 12, Fig. 13: die Gabel des Halters in Frontansicht, Seitenansicht und Draufsicht,
- Fig. 14, Fig. 15: den Drehsockel der Gabel in Seitenansicht, teilweise im Schnitt, sowie in Draufsicht,
- Fig. 16,: zwei Backen, aus denen der Lagerring zur Lagerung des Drehkranzes besteht,
- Fig. 17: eine einzelne Backe in Seitenansicht von Innen gesehen,
- Fig. 18, Fig. 19: den kompletten Lagerring in Draufsicht und Seitenansicht,
- Fig. 20: in Seitenansicht ähnlich Fig. 1 eine geänderte Ausführungsform des Halters mit darin aufgenommem Wellrohr,
- Fig. 21: den Halter gemäß Fig. 20, ohne Rohr, in Richtung der Rohrachse gesehen.

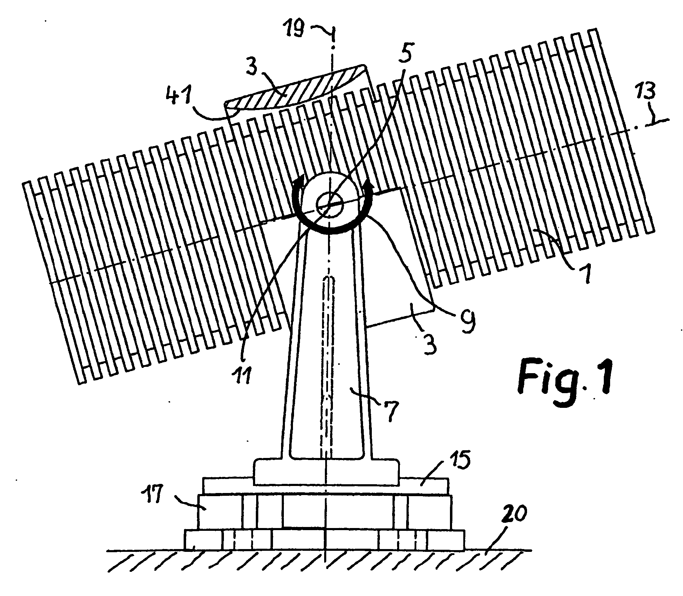

Gemäß Fig. 1 ist ein Wellrohr 1 in einer ringförmigen Aufnahme 3 aufgenommen, die im oberen Teil von Fig. 1 im Schnitt, ansonsten in Seitenansicht dargestellt ist. Die ringförmige Aufnahme 3 ist mittels Lagerzapfen 5 in den Schenkeln einer Gabel 7 schwenkbar gelagert, so daß die Aufnahme 3 mit dem Wellrohr 1 in Richtung des Doppelpfeiles 9 um eine erste Achse 11 schwenkbar ist, die in Fig. 1 senkrecht zur Zeichenebene und damit senkrecht zur Achse 13 des Rohres 1, diese schneidend, verläuft.

Die Gabel 7 ist mittels eines Drehsockels 15 in einem Lagerring 17 um die Achse 19 drehbar gelagert, die senkrecht zur ersten Drehachse 11 verläuft und die Rohrachse 13 schneidet. Der Lagerring 17 ist z. B. mit Schrauben (nicht dargestellt) an einer Unterlage 20, z. B. einem Konstruktionsteil eines Roboters, befestigt.

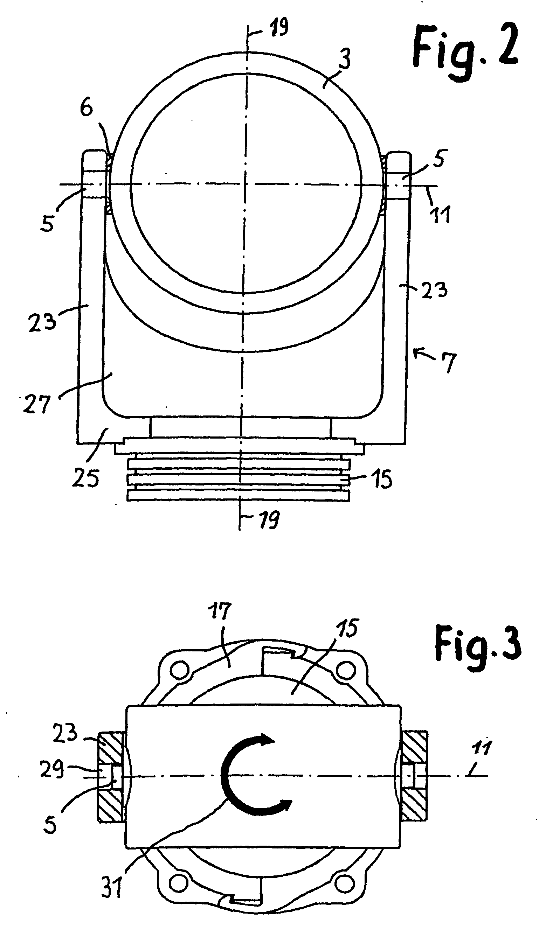

Fig. 2 zeigt in Frontalansicht die ringförmige Aufnahme 3, die mittels ihrer Lagerzapfen 5 an den Schenkeln 23 der Gabel 7 um die Achse 11 schwenkbar gelagert ist. Am Unterteil 25 der Gabel 7 ist der Drehsockel 15 befestigt, der in dem Lagerring 17 (Fig. 1) aufgenommen wird, um die Gabel 7 um die Achse 19 drehbar zu lagern. Zwischen den Schenkeln 23 der Gabel kann sich ein Versteifungssteg 27 befinden.

Fig. 3 zeigt von oben gesehen die Aufnahme 3, die mittels ihrer seitlichen Lagerzapfen 5 in den Lageröffnungen 29 der (hier im Schnitt dargestellten) Enden der Schenkel 23 der Gabel 7 gelagert ist. Ebenfalls in Fig. 3 sichtbar ist der (später noch im einzelnen beschriebene) Lagerring 17, in dem der Drehsockel 15 der Gabel 7 drehbar gelagert ist, so daß die Gabel 7 zusammen mit der Halterung 3 im Sinne des Doppelpfeiles 31 von Fig. 3 um die Achse 19 (Fig. 2) gedreht werden kann.

Die Bewegungsfreiheit für die Drehung um die in Fig. 1 vertikale Achse 19 beträgt 360°. Die Bewegungsfreiheit um die Querachse 11 hängt vom Abstand des Rohres 1 von der Unterlage 19 und damit u. a. von der Höhe der Gabel 7 ab und kann z. B. 130° betragen.

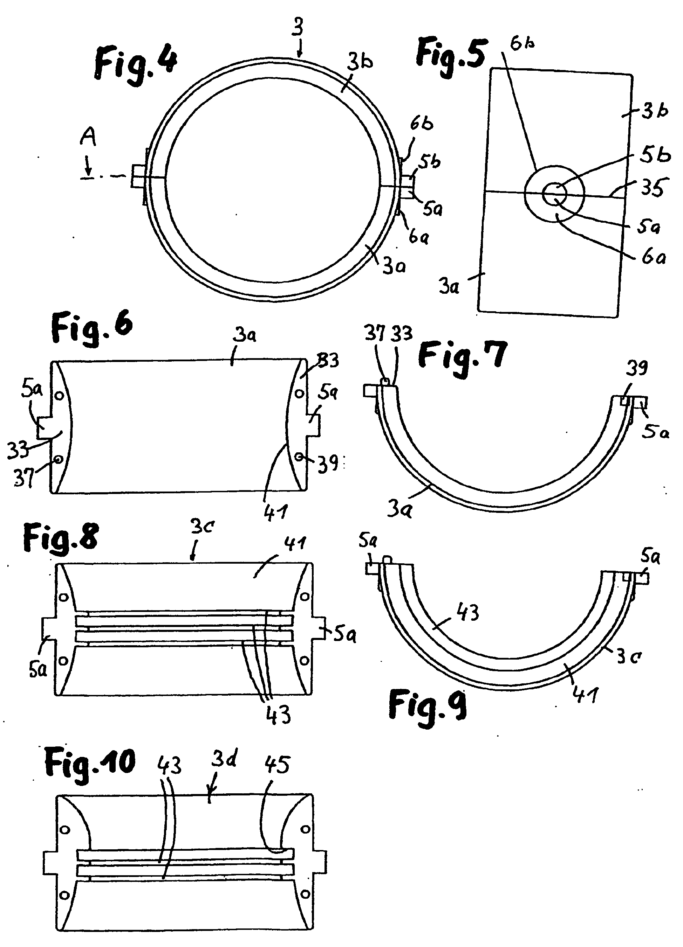

Fig. 4 und 5 zeigen die Aufnahme 3 für das Rohr in Frontalansicht und in Seitenansicht. Die Aufnahme 3 ist ringförmig und aus zwei halbkreisförmigen Backen 3a, 3b zusammengesetzt. Eine einzelne Backe 3a ist in Fig. 6 in Richtung des Pfeiles A von Fig. 4 gesehen dargestellt und in Fig. 7 in einer Ansicht parallel zur Achse. Jede halbkreisförmige Backe 3a, 3b hat zwei in einer gemeinsamen Meridianebene liegende Anlageflächen 33, die aneinander anliegend die Trennfuge 35 (Fig. 5) der ringförmigen Aufnahme 3 bilden. In den Anlageflächen 33 können Zentriervorsprünge 37 und Zentriervertiefungen 39 ausgebildet sein, um die beiden Backen 3a, 3b exakt zueinander zu zentrieren.

An beiden Enden der Backe 3a ist je ein radial vorspringender halber Lagerzapfen 5a, 5b, d. h. ein halbzylindrischer Zapfen angeformt. Werden zwei Backen 3a, 3b zusammengefügt, so ergänzen sich die halbzylindrischen Lagerzapfen 5a, 5b zu kreisrunden Lagerzapfen 5, die in die entsprechenden Lageröffnungen 29 der Gabel 7 eingesteckt werden, wodurch gleichzeitig die beiden Backen 3a, 3b zusammengehalten werden.

Die halbzylindrischen Lagerzapfen 5a, 5b sind von über die Umfangsfläche der Backen 3a, 3b erhöhten Schultern 6a, 6b umgeben, die zusammen eine die Lagerzapfen 5 umgebende kreisringförmige Anlageschulter 6 (auch in Fig. 2 im Schnitt dargestellt) bilden, die zur Anlage an der Innenfläche der Schenkel 23 der Gabel 7 bestimmt ist. Hierdurch wird die Führung und Stabilität der in der Gabel 7 drehbar gelagerten Rohraufnahme 3 verbessert.

Die innere Umfangsfläche 41 der von den Backen 3a, 3b gebildeten Aufnahme 3 hat, wie aus Fig. 1 und Fig. 6 ersichtlich, eine glatte und vorzugsweise konvex gewölbte Form. Dadurch ist das Wellrohr 1 in der Aufnahme 3 in Achsrichtung verschiebbar aufgenommen. Zu den zwei Freiheitsgraden der Schwenkung um die Achsen 11 und 19 tritt somit ein zusätzlicher Freiheitsgrad der Verschiebung in Richtung der Rohrachse 13 hinzu.

Wenn eine solche verschiebbare Lagerung des Wellrohres 1 in der Aufnahme 3 nicht erwünscht ist, kann die Aufnahme 3 aus Backen von anderer Form zusammengesetzt werden. Ein Beispiel ist in Fig. 8 und Fig. 9 gezeigt. Die in Fig. 8 und Fig. 9 dargestellte Backe 3c unterscheidet sich von der Backe 3a gemäß Fig. 6 nur dadurch, daß an der Innenfläche 41 eine Anzahl von nach innen vorspringenden Rippen 43 angeformt sind, die in die Wellennuten des Wellrohres 1 (Fig. 1) eingreifen und dadurch das Wellrohr in der Aufnahme 3 unverschiebbar festlegen können.

Eine weitere alternative Ausführungsform der Backen zeigt Fig. 10. Die in Fig. 10 dargestellte Backe 3d hat an ihrer inneren Umfangsfläche eine nach innen vorspringende Stufe 45 als Anschlag für das Ende eines Wellrohres. Der Stufe 45 vorgelagert befinden sich eine oder zwei ringförmige Rippen 43 für den Eingriff in die Wellennuten des Wellrohres. Eine aus Backen 3d gemäß Fig. 10 zusammengesetzte Aufnahme 3 wird für solche Fälle verwendet, in denen das Wellrohr in der Halterung enden soll und das Wellrohrende in der Aufnahme 3 gegen Herausziehen gesichert werden soll.

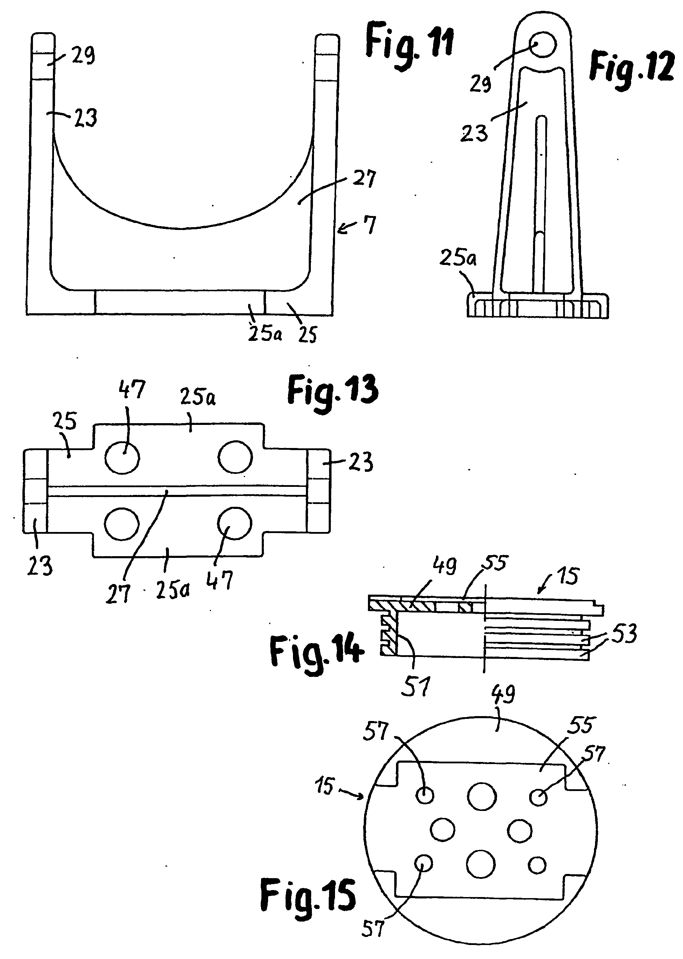

Die in Fig. 11 bis 13 dargestellte Gabel 7 ist ein Spritzgußteil und weist zwei Schenkel 23 und eine Basis 25 auf. Zwischen den Schenkeln 23 erstreckt sich ein Versteifungssteg 27. In den Schenkeln 23 sind die Lageröffnungen 29 ausgebildet. Die Basis 25 hat, wie in der Draufsicht von Fig. 13 erkennbar, eine rechteckige Verbreiterung 25a, in deren Bereich Öffnungen 47 für den Durchtritt von Befestigungsschrauben ausgebildet sind.

Der in Fig. 14 oder 15 dargestellte Drehsockel 15 ist ein Spritzgußteil mit einer kreisrunden Platte 49, an deren Unterseite ein kreisrunder zylindrischer Kragen 51 vorspringt, der an seiner äußeren Umfangsfläche eine Anzahl vorspringender Rippen 53 aufweist. An der Oberseite der Platte 49 weist der Drehsockel 15 eine flache Vertiefung 55 auf, deren Form an den Umriß der Basis 25 der Gabel 7 (Fig. 11 bis 13) bzw. von deren Erweiterung 25a angepaßt ist. Die Vertiefung 55 bildet somit einen Sitz für die Basis 25 der Kabel 7. Im Bereich der Vertiefung 55 sind in der Platte 49 Schrauböffnungen 57 ausgebildet, die entsprechend den Öffnungen 47 der Gabel 7 angeordnet sind und die Befestigungsschrauben zur Befestigung der Gabel 7 an dem Drehsockel 15 aufnehmen können.

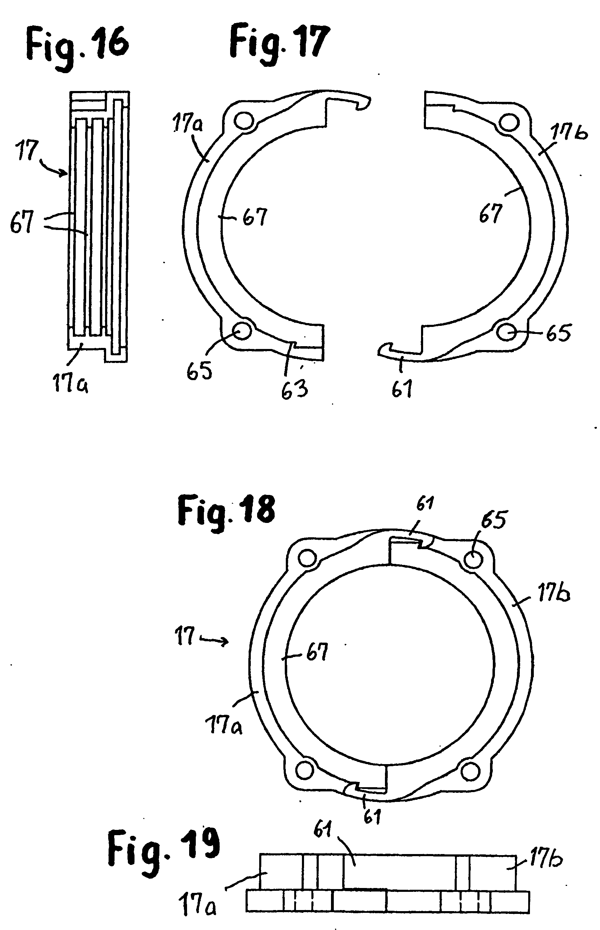

Der in Fig. 16 bis 18 dargestellte Lagerring 17 besteht aus zwei im wesentlichen halbkreisförmigen Backen 17a, 17b, die in Fig. 17 getrennt voneinander dargestellt sind und gemäß Fig. 18 zu dem kompletten Lagerring zusammengefilgt werden können. Jede Lagerringbakke 17a, 17b hat an einem Ende einen elastischen Haken 61, der hinter eine entsprechende Schulter 63 der anderen Lagerringbacke einrasten kann. Jede Lagerringbacke 17a, 17b hat z. B. zwei Öffnungen 65 für die Aufnahme von Befestigungsschrauben, um den Lagerring 17 an eine Unterlage, z. B. der Unterlage 20 in Fig. 1, zu befestigen. Jede der Lagerringbacken 17a, 17b trägt an ihrer inneren Umfangsfläche vorspringende Rippen 67, die zwischen die Rippen 53 des Lagersockels gemäß Fig. 14 eingreifen können, um den Lagersokkel 15 drehbar, aber in Axialrichtung unbeweglich in dem Lagerring 17 zu lagern.

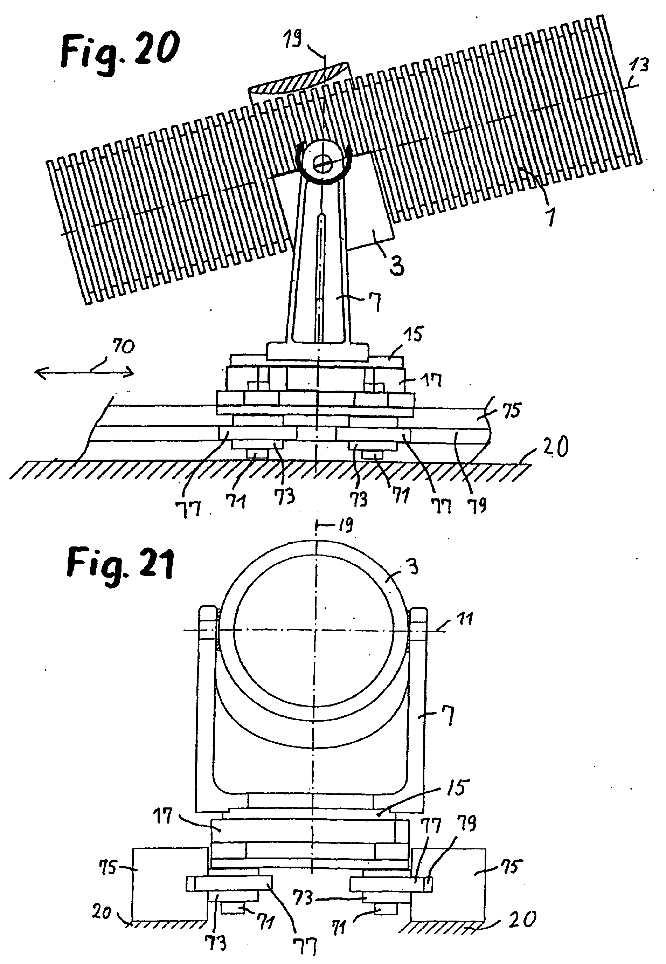

Die in Fig. 20 und Fig. 21 dargestellte, modifizierte Ausführungsform des erfindungsgemäßen Halters bietet zusätzlich zu der Schwenkbarkeit um die zueinander senkrechten Achsen 19 und 11 einen weiteren Freiheitsgrad der Bewegung, nämlich die Möglichkeit einer Verschiebung in einer zur Unterlage 20 parallelen Richtung, die in Fig. 20 mit dem Doppelpfeil 70 angedeutet ist.

Die Bestandteile des Halters gemäß Fig. 20 und 21, nämlich die Rohraufnahme 3, die Gabel 7, der Drehsockel 15 und der Lagerring 17, sind identisch wie bei der zuvor beschriebenen Ausführungsform ausgebildet und mit den gleichen Bezugszeichen bezeichnet. Der Unterschied der Ausführungsform nach Fig. 20 und 21 zu der vorhergehenden Ausführungsform besteht darin, daß der Lagerring 17, in welchem die Gabel 7 mittels des Drehsockels 15 um die Hochachse 19 drehbar gelagert ist, nicht direkt an der Unterlage 20 starr befestigt ist. Vielmehr sind am Lagerring 17, zum Beispiel in dessen in Fig. 18 gezeigten Öffnungen 65, vier nach unten vorspringende Achsbolzen 71 befestigt, auf denen vier Führungsrollen 73 drehbar gelagert sind, die an den einander zugewandten Führungsflächen von zwei geradlinigen Führungsschienen 75 abrollen, die parallel zueinander an der Unterlage 20 befestigt sind. Jede Führungsrolle 73 hat einen radial vorspringenden Spurkranz 77, der in eine Führungsnut 79 der jeweiligen Führungsschiene 75 eingreift.

Diese Verschiebbarkeit des gesamten Halters in der Verschieberichtung 70 kann die Verschiebbarkeit des Wellrohres 1 entlang der Rohrachse 13 in der Rohraufnahme 3 ersetzen, so daß das Wellrohr geschont wird.

## Patentansprüche

1. Halter für ein Rohr oder dergleichen,
mit einer Aufnahme (3) für das Rohr (1), die das Rohr (1) auf einem größeren Teil seines Umfangs umschließen kann,
einer Gabel (7), an der die Aufnahme (3) um eine erste Achse (11) drehbar gelagert ist, und einem Drehlager (15, 17), in dem die Gabel (7) um eine zweite Achse (19) drehbar gelagert ist,
wobei die erste Achse (11) senkrecht zu der Achse (13) eines in der Aufnahme aufgenommenen Rohres (1) und die zweite Achse (19) senkrecht zur ersten Achse (11) ist.

2. Halter nach Anspruch 1, **dadurch gekennzeichnet, daß** die Aufnahme (3) ringförmig und aus zwei halbkreisförmigen Backen (3a, 3b) zusammengesetzt ist.

3. Halter nach Anspruch 1 und 2, **dadurch gekennzeichnet, daß** die Aufnahme (3) zwei zueinander fluchtende, nach außen vorspringende Lagerzapfen (5) aufweist, die in den entsprechenden Lageröffnungen (29) der Gabel (7) drehbar gelagert sind.

4. Halter nach Anspruch 2 und 3, **dadurch gekennzeichnet, daß** jede Backe (3a, 3b) zwei halbkreisförmige Lagerzapfen (5a, 5b) aufweist, wobei sich die Lagerzapfen (5a, 5b) der beiden aneinandergesetzten Backen (3a, 3b) zu kreisrunden Lagerzapfen (5) ergänzen, die in den Lageröffnungen (29) der Gabel (7) gemeinsam gelagert sind und durch diese zusammengehalten werden.

5. Halter nach einem der Ansprüche 1 bis 4, **dadurch gekennzeichnet, daß** die Aufnahme (3) an ihrem Innenumfang (41) ein glattes Profil aufweist, derart, daß ein in der Aufnahme (3) aufgenommenes Rohr (1) in Längsrichtung relativ zur Aufnahme (3) verschiebbar geführt ist.

6. Halter nach einem der Ansprüche 1 bis 4, **dadurch gekennzeichnet, daß** die Aufnahme (3) an ihrem Innenumfang (41) mindestens einen Vorsprung (43) aufweist, der zum Eingreifen in ein Wellental eines in der Aufnahme (3) aufgenommenen Wellrohres (1) ausgebildet ist, derart, daß das Wellrohr (1) in der Aufnahme (3) in seiner Längsrichtung unverschieblich festgelegt ist.

7. Halter nach Anspruch 6, **dadurch gekennzeichnet, daß** mindestens ein Vorsprung (45) zum Festlegen des Endes eines Wellrohres ausgebildet ist.

8. Halter nach einem der Ansprüche 1 bis 7, **dadurch gekennzeichnet, daß** das Drehlager (15, 17) einen mit der Gabel (7) verbundenen Drehsockel (15) und einen dem Drehsockel (15) umgebenden Lagerring (17) aufweist, wobei am Umfang des Drehsockel (15) und am Innenumfang des Lagerrings (17) ineinandergreifende Vorsprünge (53, 67) und Nuten ausgebildet sind.

9. Halter nach Anspruch 8, **dadurch gekennzeichnet, daß** der Lagerring (17) aus zwei Halbringen (17a, 17b) zusammengesetzt ist, die durch Einrastverbindungen (61, 63) miteinander verbunden sind.

10. Halter nach Anspruch 1, **dadurch gekennzeichnet, daß** das Drehlager (15, 17) in einer geradlinigen Führung (75) verschiebbar geführt ist.

11. Halter nach Anspruch 10, **dadurch gekennzeichnet, daß** das Drehlager (15, 17) Führungsrollen (73) aufweist, die an Führungsschienen (75) geführt sind.

## Claims

1. A holder for a pipe or the like,
with a receptacle (3) for the pipe (1), which can enclose the pipe (1) over a majority of its circumference,
with a yoke (7) in which the receptacle (3) is pivotably mounted about a first axis (11),
and with a pivotal mounting (15,17) in which the yoke (7) is rotatably mounted about a second axis (19),
wherein the first axis (11) is perpendicular to the axis (13) of a pipe (1) accommodated in the receptacle and the second axis (19) is perpendicular to the first axis (11).

2. A holder according to Claim 1, **characterised in that** the receptacle (3) is annular and is assembled from two semicircular jaws (3a,3b).

3. A holder according to Claim 1 or 2, **characterised in that** the receptacle (3) has two mutually aligned, outwardly projecting trunnions (5) which are rotatably mounted in the corresponding bearing apertures (29) of the yoke (7).

4. A holder according to Claims 2 and 3, **characterised in that** each jaw (3a,3b) has two semicircular trunnions (5a,5b), wherein the trunnions (5a,5b) of the abutting two jaws (3a,3b) complement one another to form circular trunnions (5) which are jointly mounted in the bearing apertures (29) of the yoke (7) and are held together by them.

5. A holder according to any one of Claims 1 to 4, **characterised in that** the receptacle (3) has a smooth profile on its inner circumference (41) so that a pipe (1) accommodated in the receptacle (3) is guided displaceably in a longitudinally direction relative to the receptacle (3).

6. A holder according to any one of Claims 1 to 4, **characterised in that** the receptacle (3) has on its inner circumference (41) at least one projection (43) which is designed to engage in a corrugation trough of a corrugated pipe (1) accommodated in the receptacle (3) so that the corrugated pipe (1) is located non-displaceably in the receptacle (3) in its longitudinal direction.

7. A holder according to Claim 6, **characterised in that** at least one projection (45) is provided to locate the end of a corrugated pipe.

8. A holder according to Claim 1 to 7, **characterised in that** pivotal mounting (15,17) has a swivel base (15) connected with the yoke (7) and a bearing ring (17) surrounding the swivel base (15), wherein interengaging projections (53,67) and grooves are formed on the circumference of the pivot pedestal (15) and on the inner circumference of the bearing ring (17).

9. A holder according to Claim 8, **characterised in that** the bearing ring (17) is assembled from two half rings (17a, 17b) which are joined together by snap-fit connections (61,63).

10. A holder according to Claim 1, **characterised in that** the pivotal mounting (15,17) is guided displaceably in a straight guide (75).

11. A holder according to Claim 10, **characterised in that** the pivotal mounting (15,17) has guide rollers (73) which are guided on guide rails (75).

## Revendications

1. Support pour un tube ou un dispositif similaire, avec un réceptacle (3) pour le tube (1) qui peut entourer le tube (1) sur une très grande partie de sa circonférence,
une fourche (7) sur laquelle le réceptacle (3) est logé de manière à pouvoir tourner autour d'un premier axe (11) et un coussinet de pivotement (15, 17) dans lequel la fourche (7) est logée de manière à pouvoir tourner autour d'un second axe (19),
le premier axe (11) étant perpendiculaire à l'axe (13) d'un tube (1) logé dans le réceptacle et le second axe (19) étant perpendiculaire au premier axe (11).

2. Support selon la revendication 1, **caractérisé en ce que** le réceptacle (3) est de forme annulaire et composé de deux mâchoires semi-circulaires (3a, 3b).

3. Support selon la revendication 1 et 2, **caractérisé en ce que** le réceptacle (3) comporte deux tourillons (5) saillant vers l'extérieur, alignés l'un par rapport à l'autre, qui sont logés de manière rotative dans les ouvertures de logement correspondantes (29) de la fourche (7).

4. Support selon la revendication 2 et 3, **caractérisé en ce que** chaque mâchoire (3a, 3b) comporte deux tourillons semi-circulaires (5a, 5b), les tourillons (5a, 5b) des deux mâchoires appliquées l'une à l'autre (3a, 3b) se complétant pour former des tourillons circulaires (5) qui sont logés ensemble dans les ouvertures de logement (29) de la fourche (7) et sont maintenus fixés l'un à l'autre par celles-ci.

5. Support selon l'une quelconque des revendications 1 à 4, **caractérisé en ce que** le réceptacle (3) comporte, sur une circonférence interne (41), un profil lisse de telle sorte qu'un tube (1) logé, dans le réceptacle (3) soit guidé de manière à pouvoir être déplacé dans le sens longitudinal par rapport au réceptacle (3).

6. Support selon l'une quelconque des revendications 1 à 4, **caractérisé en ce que** le réceptacle (3) comporte, sur une circonférence interne (41), au moins une saillie (43) qui est réalisée pour l'engrènement dans un creux de vague d'un tube ondulé (1) logé dans le réceptacle (3) de telle sorte que le tube ondulé (1) soit fixé dans le réceptacle (3) de manière à ne pas être déplaçable dans son sens longitudinal.

7. Support selon la revendication 6, **caractérisé en ce qu'**au moins une saillie (45) est réalisée pour la fixation de l'extrémité d'un tube ondulé.

8. Support selon l'une quelconque des revendications 1 à 7, **caractérisé en ce que** le palier rotatif (15, 17) comporte un socle rotatif (15) relié à la fourche (7) et un anneau de roulement (17) entourant le socle rotatif (15), des saillies (53, 67) et des rainures s'engrenant les unes dans les autres étant réalisées sur la circonférence du socle rotatif (15) et sur la circonférence interne de l'anneau de roulement (17).

9. Support selon la revendication 8, **caractérisé en ce que** l'anneau de roulement (17) est composé de deux demi-cercles (17a, 17b) qui sont reliés l'un à l'autre par des liaisons à verrouillage (61, 63).

10. Support selon la revendication 1, **caractérisé en ce que** le palier rotatif (15, 17) est guidé de manière à pouvoir être déplacé dans une glissière rectiligne (75).

11. Support selon la revendication 10, **caractérisé en ce que** le palier rotatif (15, 17) comporte des galets de guidage (73) qui sont guidés sur des rails de guidage (75).
